# EUROPEAN PATENT SPECIFICATION

(11) **EP 2 677 773 B1**
(45) Date of publication and mention of the grant of the patent: **13.05.2020**
(21) Application number: 12004717.0
(22) Date of filing: 22.06.2012
(51) Int. Cl.: H04W 4/80, H04L 29/08

(54) **Near field communications transport auto discovery**
Nahfeldkommunikationstransport-Automatikerkennung
Découverte automatique de transport de communication en champ proche

(43) Date of publication of application: 25.12.2013
(73) Proprietor: BlackBerry Limited, Waterloo, ON N2K 0A7 (CA)
(72) Inventor: Chen, Xianfeng, Mississauga, Ontario L4W 0B4 (CA); Bondar, Yevgeny, Mississauga, Ontario L4W 0B5 (CA); Stoev, Orlin Vesselinov, Mississauga, Ontario L4W 0B5 (CA)
(74) Representative: Vigand, Philippe

(56) References cited:
- US-A1- 2008 046 570
- US-A1- 2009 111 378
- US-A1- 2009 282 130
- US-A1- 2009 325 484
- US-A1- 2010 178 868
- US-A1- 2011 143 661
- NFC FORUM: "NFC Data Exchange Format (NDEF) - NDEF 1.0", INTERNET CITATION, 24 July 2006 (2006-07-24), XP002413994, Retrieved from the Internet: URL:http://www.nfc-forum.org/specs/spec_li cense/download_spec/0f5678c114d295e2da0d90 2f4e7839846281fc44/NFCForum-TS-NDEF_1.0.pd f [retrieved on 2007-01-10]

## Description

### BACKGROUND

### Field of the Disclosure

This application relates to the field of communications, and more particularly, to mobile wireless communications devices and related methods that use Near Field Communications (NFC) in conjunction with other communication technologies.

### Description of the Background

Mobile communication systems continue to grow in popularity and have become an integral part of both personal and business communications. Various mobile devices now incorporate Personal Digital Assistant (PDA) features, such as calendars, email, address books, Internet ("Web"), task lists, calculators, memo and writing programs, media players, games, etc. For example, these multi-function devices usually allow users to send and receive electronic mail (email) messages wirelessly and access the internet via a cellular network, wireless wide area network (WWAN), and/or a wireless local area network (WLAN), for example.

Some mobile devices also incorporate contactless card reading technology, and/or Near Field Communication protocols, antenna, and/or chips to enable such contactless card reading technology. Near Field Communications (NFC) technology may be used for short-range communications. NFC may use magnetic field induction to enable communication between electronic devices, including, for example, mobile wireless communications devices, and to enable communications between, for example, devices and passive cards, tags, or the like. NFC communications are typically over short ranges, such as over distances of a few centimeters or less, and may be high frequency in nature. These short-range communications applications may include, for example, payment and ticketing, electronic keys, identification, device setup service and similar information sharing, by way of non-limiting example.

An NFC connection may deliver, for example, data or information related to, for example, phone numbers, Uniform Resource Locators (URLs), contact information, geo-location, and the like. NFC technologies may employ physical or virtual tags, cards, and the like that may be read from, and/or written to, by NFC-enabled mobile devices. However, supporting the plurality of NFC communication technologies in applications, and limitations imposed by the slow speed and very limited range of NFC enabled devices that are also capable of communicating using faster and less proximately restricted communication technologies, present challenges.

Patent publication number US 2011/0143661 A1 discloses a method, device and system for firmware update by near-field communication. The disclosure relates to a method, comprising receiving patch data via contactless communication comprising a patch for a patchable firmware and patch identification information; and patching said firmware using said patch.

Patent publication number US 2009/0282130 A1 discloses resource sharing via close-proximity wireless communication. This disclosure relates to a system for sharing information between users and/or devices via close-proximity wireless communication. Devices located in close-proximity may be configured to transmit/receive wireless messages including information used to configure at least one of the devices. The configuration information may include, for example, information needed to add another user and/or device to a network group residing on the device receiving the configuration information. The configuration information may also serve other purposes, for example, to grant access to a resource located remotely to the device receiving the configuration information so that this wireless-enabled apparatus may remotely access and/or control the remote resource.

Patent publication number US 2009/0111378 A1 discloses devices and methods for content sharing. This disclosure describes methods and devices for automatically coupling two or more mobile communication devices to share content such as calls, music, documents, video and games where two or more devices automatically determine the feasibility of sharing the content and negotiate to find an efficient manner in which to do so. In this way, the pairing between devices may be transported to the users. Moreover, a better choice in a transport may be selected without user input. Each device may include a near field communication (NFC) device that when in range of the other device may automatically initiate pairing between the devices so that the devices may share content. The users of NFC enabled devices may have little or minimal interactions except that one or more users may bring the devices within range so that the NFCs may initiate the pairing between the devices.

Patent publication number US 2009/0325484 A1 discloses method and system for managing data in a near field communication network. This disclosure describes a method and system for managing data between a plurality of electronic devices in a Near Field Communication (NFC) network are provided. The method is performed at a first electronic device. A request is received from a second electronic device to send context data. The context data is then represented in accordance with a context Record Type Definition (RTD). The context RTD is used for defining context data in the NFC network. The context data that is represented in accordance with the context RTD is exchanged with the second electronic device.

Patent publication number US 2010/0178868 A1 discloses method and device for managing application data in an NFC system. This discloses a method for managing application data in an NFC system embedded or to be embedded in a portable object and including a contactless data sending/receiving interface, one or more host processors, and a data routing or transferring processor is described. The method includes generating internal application data in response to the occurrence if an internal event within the NFC system, and supplying the internal application data to a host processor of the NFC system.

US 2008/0046570 A1 discloses that web compatible information is exchanged over wireless communications utilizing web-based formats, such techniques being employed over e.g. NFC air links and other wireless communication means, to share information between devices in web exchangeable forms. The disclosed communication techniques allow lightweight communications to be automatically established between resource-constrained devices such as PDAs, cell phones, kiosks, movie posters, etc. The communication means can also be utilized to establish alternate types of communications by passing handshaking data between devices that can allow other communication protocols to be utilized.

An additional prior art document is represented by the technical specification from the NFC Forum with title "NFC Data Exchange Format", NDEF 1.0 dated 24.07.2016.

### SUMMARY

In a first aspect of the invention there is provided a Near Field Communication device as defined in claim 1 of the appended claims. In a second aspect there is provided a method of providing adaptation for Near Field Communication, the method as defined in appended claim 15.

### BRIEF DESCRIPTION OF THE DRAWINGS

The accompanying drawings illustrate various aspects and exemplary embodiments of the herein disclosed devices, systems, and methods. In the drawings, like numerals represent like elements, and:
Figure 1 illustrates coding aspects compatible for use with an exemplary embodiment of the present disclosure;
Figure 2 illustrates a stack architecture for use with an exemplary embodiment of the present disclosure;
Figure 3 illustrates coding aspects compatible for use with an exemplary embodiment of the present disclosure;
Figure 4 illustrates communication aspects involving two NFC capable devices in accordance with an exemplary embodiment of the present disclosure;
Figure 5 illustrates a stack architecture for use with an exemplary embodiment of the present disclosure;
Figure 6 illustrates a stack architecture for use with an exemplary embodiment of the present disclosure;
Figure 7 illustrates communication aspects in accordance with an exemplary embodiment of the present disclosure;
Figure 8 illustrates aspects of an NFC capable device in accordance with an exemplary embodiment of the present disclosure;
Figure 9 illustrates communication aspects involving an NFC capable device and an NFC tag in accordance with an exemplary embodiment of the present disclosure;
Figure 10 illustrates an Adaptor in accordance with exemplary embodiments of the disclosure; and
Figure 11 illustrates a method in accordance with exemplary embodiments of the disclosure.

### DETAILED DESCRIPTION

The figures and descriptions of the disclosure have been simplified to illustrate elements that are relevant for clear understanding, while eliminating, for the purposes of clarity and brevity, other elements found in typical communications, and particularly Near Field Communications, and related apparatuses, systems, and methods. Those of ordinary skill in the art will thus recognize the other elements and/or steps that are desirable and/or required in implementing the disclosure. However, because such elements and steps are well known in the art, and because they do not facilitate a better understanding of the present disclosure, a discussion of such elements and steps is not provided herein. The disclosure herein is nevertheless directed to all variations and modifications to the disclosed elements and steps that will be known or apparent to those skilled in the art in light of this disclosure. Of note, like numbers refer to like elements throughout the disclosure.

Near Field Communications (NFC) is a bidirectional and short range wireless communication technology which may operate at, for example, approximately 13.56 MHz and at a bandwidth of about 2 MHz. Standard NFC data rates may range from about 106kbps to about 424kbps, and may be used in a variety of operation modes, including, for example, reader/writer, peer-to-peer, and card emulation (i.e., where communication occurs between an NFC capable mobile device and a passive NFC/RFID tag, a second NFC capable mobile device, or an NFC capable reader). Each NFC operating mode may use a distinct communication interface, such as, for example, ISO/IEC 14443, ISO/IEC 18092 and ISO/IEC 15693, on the radio frequency (RF) layer. An NFC interaction may occur when an NFC capable device contacts and/or generates an active field allowing magnetic inductive coupling to transfer energy and data between the NFC devices, or between the NFC device and the tag/card.

As used herein, an NFC device may be or include a multi-function mobile device, and a NFC card/tag may represent a tag readable by, or understandable to, an NFC device, except as noted and as will be evident in light of the disclosure. An NFC device or tag with an internal power supply is considered active, whereas a device or tag having no power supply is considered passive. Passive devices or tags, such as smart cards, for example, may absorb energy (and receive data) from an active device through the aforementioned magnetic inductive coupling. Such a passive device or tag, when it is powered by at least one active device, may communicate and exchange data with the device or other devices. A tag may also be virtual, such as to indicate particular operations to a device in the same manner as would a physical NFC tag.

The security of NFC transmissions is provided principally by the relatively short distance such transmissions travel and the relatively low power at which they are transmitted for physical tags, and the maintenance of NFC operations within a device for virtual tags. In other words, the NFC communication link characteristics are used to limit the ability of third party devices to intercept and/or interfere with a given NFC transmission or operation.

Further still, NFC capable devices or tags may include software applications and/or code used to verify and/or allow for a successful NFC interaction to occur between at least two devices, or between a device and a tag. Such an application, for example, may launch when a certain type of NFC interaction is detected and may verify that the pairing device or tag is authorized and/or is of an acceptable type. For example, a user of an active NFC capable mobile device may wish to ignore any interactions with other mobile devices. Similarly, an NFC capable device used for a specific purpose, such as for reading "smart" cards/tags, for example, may ignore requested interaction from any NFC capable device that is not recognized as a smart card/tag. Additionally, in known examples, a personal identification number (PIN) and/or security key or other credentials and/or information may also be exchanged between a first and second communications device using NFC, such as for establishing a wireless communications connection, such as a Bluetooth connection, a mobile telephone call or Internet connection, or other wireless connection, by way of example.

As mentioned above, physical NFC tags may be passive or active. In a situation in which an active NFC capable device is brought within range of a passive tag, or vice versa, the RF signal created by the active device generally provides sufficient energy to the tag to allow the tag to "boot up" and execute the at least one set of code resident on the tag. Such code may include an algorithm and may initiate a transfer of data, such as of the data types referenced above, to the active NFC capable device. Although active tags may communicate together, each relying on their own respective power supply, a passive tag relies on the availability of a remote power source to initiate any actions, and typically such power source comprises an active NFC device. Further, the data storage and transfer capabilities of passive tags are typically highly limited.

Although various types of physical tags may be created, there are four types of widely accepted tags (having the designations of Type 1, Type 2, Type 3 and Type 4), each having a different format and capacity. Type 1 tags are based on the ISO/IEC 14443 Type A standard, have read/write capabilities, may be modified during use, may contain a memory capacity up to 2 kB, use 16 or 32 bit digital security features, and may have a communication speed of up to 106kbps. Type 2 tags are also based on the ISO/IEC 14443 Type A standard, have read/write capabilities, may be modified during use, may contain a memory capacity up to 2 kB, generally lack a security signature, and may have a communication speed of up to 106 kbps. Type 3 tags are based on the Sony FeliCa contactless smart card interface, may contain a memory capacity up to 2 kB, and may have a communication speed of up to 212 kbps. Type 4 tags are compatible with both the ISO/IEC 14443 Type A and Type B standards, are pre-configured during the manufacturing stage, are read and/or write only, may contain a memory capacity up to 32 kB, and may have a communication speed of up to 424 kbps.

Physical tags of each type may be coded, that is, may receive binary code, or the like, for the purpose of, and to enable, performing the data exchange discussed above, as will be understood to the skilled artisan. Thereby, the coding of a tag allows the tag to exchange data with an NFC-enabled reading device, i.e., coding encodes data to be transferred by the tag, as discussed throughout the disclosure.

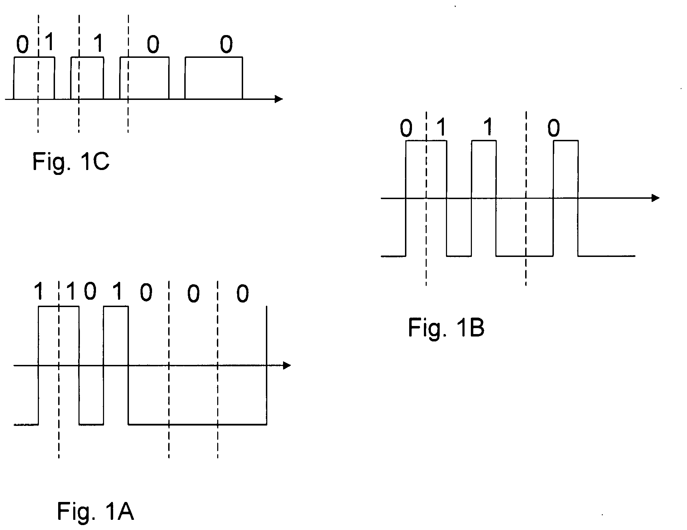

As illustrated in **Figs. 1A-C**, three coding techniques are most often used when transferring data using an NFC capable device, namely NRZ-L, Manchester, and Modified Miller. In NRZ-L coding, illustrated in **FIG. 1A**, a high state during one bit duration refers to a 1 bit and a low state expresses a 0 bit. NRZ-L coding uses 10% amplitude shift keyed (ASK) modulation and is compatible with data transfer speeds up to 848 kbps. Manchester coding, illustrated in **FIG. 1B**, utilizes the two different transitions that may occur at the midpoint of a period. A low-to-high transition expresses a 0 bit, whereas a high-to-low transition stands for a 1 bit. To achieve these conditions, it is sometimes necessary to have a transition at the middle of a bit period, which may be disregarded. Manchester coding also 10% ASK modulation and is generally compatible with data transfer speeds of 106 kbps. Modified Miller code is characterized by the pauses occurring in the carrier at different positions of a period. Depending on the information to be transmitted, bits are coded as shown in **FIG. 1C****.** A high or "1" is always encoded in the same way, but a low or "0" is encoded differently dependent upon what preceded it. Most mobile wireless communications devices operate in communications mode using a modified Miller code and 100% ASK modulation, with data transfer rates ranging from 212 kbps to 424 kbps. Further details are set forth in the Mobile NFC Technical Guidelines, Version 2.0, November 2007 by GSMA, the disclosure of which is hereby incorporated by reference in its entirety.

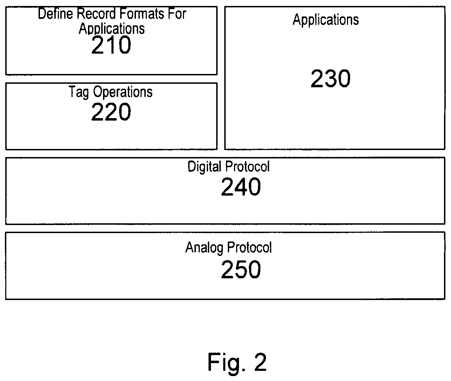

An exemplary NFC stack architecture (NFC stack) used in NFC communications and operations is illustrated in **FIG. 2****.** An analog protocol 250 may be used to determine the operating range of an NFC capable device. A digital protocol 240 may be used to create a successful communication environment by establishing, for example, polling cycles and collision detection, in accordance with industry standards, such as, for example, those discussed herein. For example, and in accordance with the NFCIP-1 standard, responsive to sensing modulation of an initiator electromagnetic carrier field by the target device, the initiator device may perform an initial collision avoidance sequence by transmitting an ATR_REQ (attribute request) command to the target device. Responsive to receiving the ATR_REQ (attribute request) command, the target device may transmit a response referenced as ATR_RES (attribute response).

Tag operations 220 may allow for commands and instructions to be successfully exchanged with specific tag types external or internal to the device, and may enable read/write capabilities with certain protocols external or internal to the device, such as, for example, NFC Data Exchange Format (NDEF). As will be appreciated by those skilled in the art, NDEF is an industry standard data format for NFC enabled devices.

Tag operations 220 may utilize the Record Type Definition (RTD) of NDEF, which provides a way to efficiently define record formats for applications 210. More particularly, RTD may consistently follow, in part, a Type Name Format (TNF) indicator, which may be used to indicate the value of the TYPE field for tag data. Such RTDs in the TNF may include, for example, Text RTD (provides an efficient way to store text strings in multiple languages by using the RTD mechanism and NDEF format), URI RTD (provides an efficient way to store Uniform Resource Identifiers (URI) by using the RTD mechanism and NDEF format), Smart Poster RTD (defines an NFC Forum Well Known Type to put URLs, SMSs or phone numbers on an NFC tag, or to transport them between devices, and builds on the RTD mechanism and NDEF format using the URI RTD and Text RTD as building blocks), Generic Control RTD (provides a simple way to request a specific action, such as starting an application or setting a mode, to an NFC capable destination device from another NFC capable, tag or card source device through NFC communication), Signature RTD (specifies the format used when signing single or multiple NDEF records, defines the required and optional signature RTD fields, and also provides a list of suitable signature algorithms and certificate types that can be used to create the signature), and Media Type RTD (may specify the type of media), among other formats.

Non-protocol or non-NDEF applications 230 may be also be included in the TNF convention, and may include vendor specific applications. These applications can be of any format and may still be indicated using the TNF convention, even if not based on or compatible with generally accepted protocols, such as NDEF, for other purposes. In addition, Simple NDEF Exchange Protocol (SNEP) may be used in NFC communications. SNEP may allow an application on an NFC capable device to exchange NDEF messages with another NFC capable device when operating in peer-to-peer mode. The protocol may use Logical Link Control Protocol (LLCP) connection-oriented transport mode to provide a reliable data exchange.

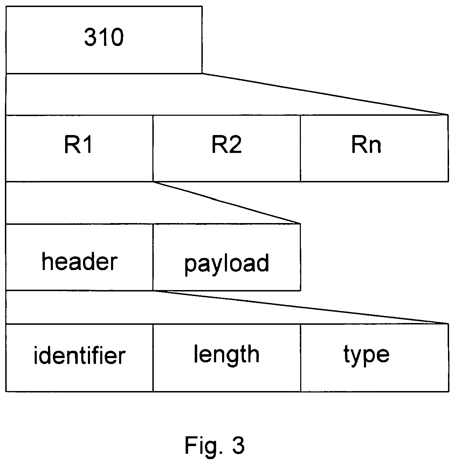

As illustrated in **FIG. 3**, an NDEF message 310, as an example, may be composed of one or more records (R1, R2,...,Rn). The limit for the number of records that may be encapsulated into an NDEF message may depend upon the application in use and the tag type used, for example. As illustrated, each message may comprise a sequence of records with each record consisting of at least two parts: a header and a payload. The header may include an indicator(s) for a variety of elements, such as payload length, payload type (such as using the TNF convention), and pay load identification. The payload length is included in the header and is generally four octets long (although a zero is a valid payload length). Payload type indicates the kind of data being carried in the payload of that record. This may be used to guide the processing of the payload at the discretion of the controlling application. The payload identifier, an optional field, may allow applications to identify the payload carried within a given record. The payload itself may be of one of a variety of different types: URL, MIME media, or NFC-specific data type, for example. By way of example, for NFC-specific data types the payload contents may be defined in an RTD file, as discussed above.

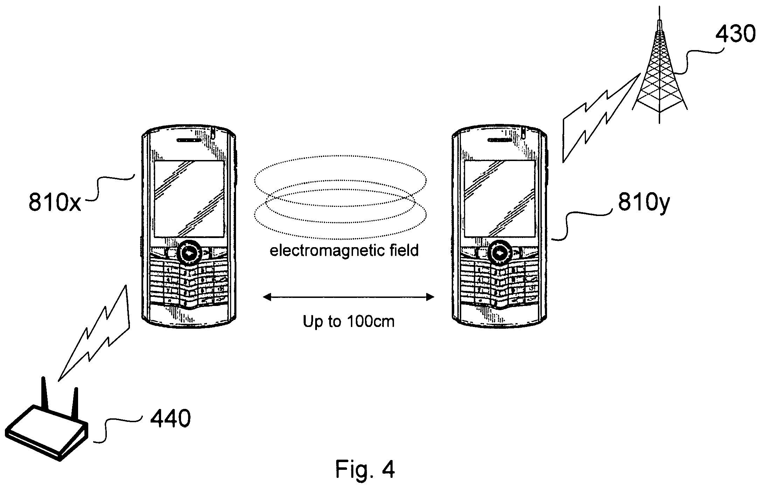

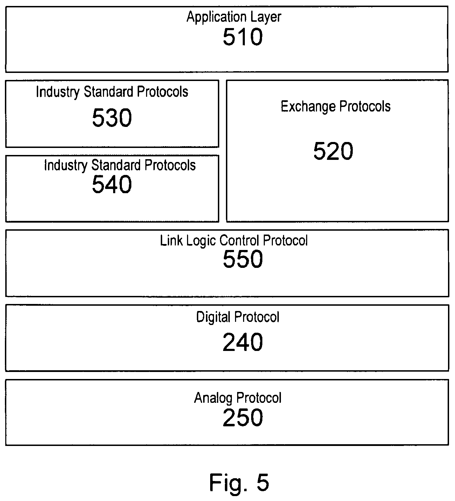

For peer-to-peer communications, as illustrated in **FIG. 4**, an exemplary stack architecture is illustrated in **FIG. 5****.** As discussed above, analog protocol 250 may be used to determine the operating range of an NFC capable device. A digital protocol 240 may be used to create a successful communication environment by establishing, for example, polling cycles and collision detection, in accordance with industry standards. Further, LLCP 550 may facilitate the transfer of data between two devices engaged in peer-to-peer communication. The LLCP, in part, may define the open systems interconnection (OSI) data link protocol used to support the peer-to-peer communication. Further, protocols 540 and 530 may include original vendor and/or industry standard protocols and may interact with exchange protocols 520, which may facilitate the exchange of messages between the communicating devices and may allow for protocols 540 and/ or 530, for example, to run over LLCP 550. Each protocol layer may contain security keys and may be used in an authentication process initiated between the at least two communication devices. Further, the application layer 510 may run on top of each of protocols 540, 530 and 520 and may include code for performing that various functions and methodologies as described herein.

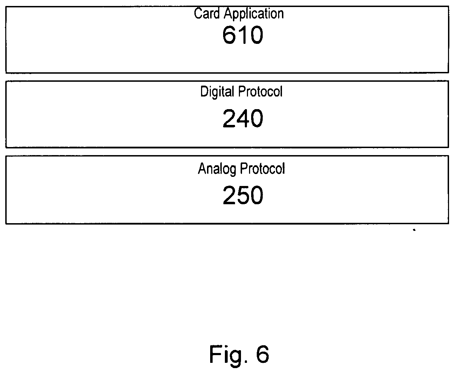

NFC capable devices may also operate in a card emulation mode using digital and analog protocols, in a manner compatible with known industry standards. Such emulation modes may include proprietary contactless card/tag applications such as payment, ticketing and access control. **FIG. 6** illustrates a simplistic protocol stack for card emulation, i.e., for tag reading. As illustrated in **FIG. 6**, the protocol stack for card emulation allows card application 610 to ride on analog protocol 250, which may be used to determine the operating range of an NFC capable device, and digital protocol 240, which may be used to create a successful communication environment by establishing, for example, polling cycles and collision detection in accordance with industry standards, such as, for example, those discussed herein.

As illustrated in **FIG. 4**, a first NFC capable device 810x may communicate via NFC communication with at least one other NFC capable device 810y when the devices are in close proximity to each other. Such interaction may be considered a peer-to-peer NFC interaction between the devices, even though each one of the devices may have the concurrent ability to communicate to other NFC capable devices and/or other communication means. For example, as illustrated, NFC capable device 810y may be engaged in peer-to-peer communication with NFC capable device 810x while communicating with baseband access 430, which may take the form of a cellular base station, for example. As will be appreciated by those skilled in the art, baseband communications may take place using various wireless communication means, such as Code Division Multiple Access (CDMA), Time Division Multiple Access (TDMA), Frequency Division Multiple Access (FDMA), Orthogonal Frequency Division Multiple Access (OFDMA), Single Carrier Frequency Division Multiple Access (SC-FDMA), and other wireless protocols.

Similarly, NFC capable device 810x may be communicatively coupled to a wireless local area network WLAN 440, such as a Wireless Fidelity (WiFi) network, or a wireless wide area network (WWAN), such as 3GPP or 4G Long Term Evolution (LTE) (not shown), for example. By way of non-limiting example, and as will be appreciated by those skilled in the art, WiFi is typically deployed as a WLAN that may extend home and business networks to wireless medium and may follow an IEEE 802.11 standard. A wireless communications connection may also be established using, for example, short-range communications subsystems which may include an infrared device and associated circuits and components as described above, or a Bluetooth communications module, to provide for communication with similarly-enabled systems and devices as well as the NFC communications. By way of further example, the herein disclosed devices, systems, and methods may utilize any short-range communications subsystem which enables communication between at least two devices, whether proximate or not, including, for example, at least one server remote from a first device.

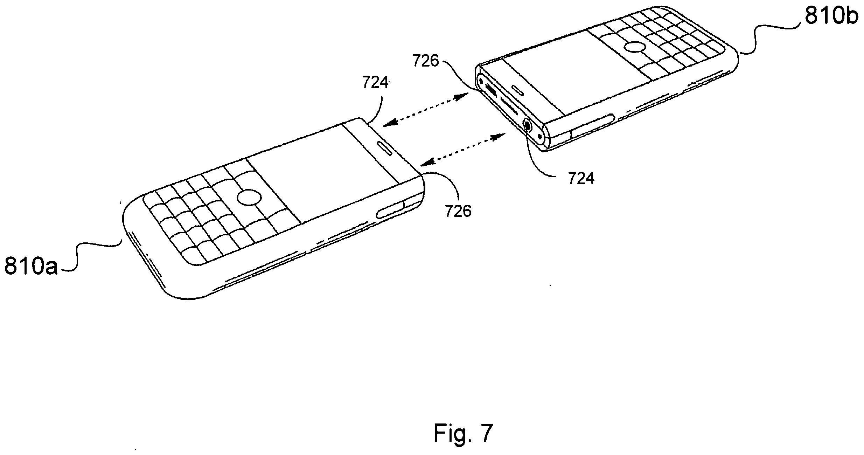

**FIG. 7** illustrates an example of two similar wireless communications devices 810a, 810b (this embodiment is also applicable in the event devices constitute device 810a and tag 950, as discussed further below) that are brought together as a physical movement towards each other into very close proximity or actual physical contact to provide a simple interface and initiate a wireless NFC connection. This physical gesture of moving a device near to or in contact with the other device provides a simple and lower-powered system and method of establishing a wireless connection, such as triggering the Hall Effect, which triggers the NFC, and/or which could also trigger a Bluetooth or WiFi wireless connection. In one non-limiting example, each device 810a, 810b is provided with a magnet 724 and an environment sensor 726, such as a Hall Effect sensor. Each is matched in a single touch or gesture, also termed a "kiss" gesture because the two devices 810a, 810b typically touch or "kiss" each other or are very close and in adjacent proximity. An example of this adjacency may be proximity in the range of about less than 10 or 20 mm, depending on the strength of the magnets, and in one example, about 7 mm or less between a tag and one of the devices, or between the two devices 810a, 810b in the illustration. The sensor 726 on each device is aligned to the magnet on the respective other device, as illustrated in **FIG. 7****.** One device's sensor senses ("sees") the other's magnet via the Hall Effect, and a signal or voltage variation from the sensor is transmitted to a processor, which activates a NFC circuit and communicates with the other device using the protocol of the NFC Stack. The devices can then read data from each other using NFC. Communications protocol data for a wireless connection, such as the Bluetooth connection, can also be obtained based on data received using the NFC connection. For example, PIN numbers and security keys could be exchanged using NFC to establish a Bluetooth connection.

As will be explained in detail below, a communications device 810a may likewise establish communication with a passive peripheral, such as a tag, by touching the device to the passive magnetic tag (NFC tag 950 in this example), thus initiating a NFC connection with the peripheral. As used herein, a passive magnetic tag, magnetic tag, or simply tag may refer to any of a variety of different devices, including NFC tags, RF ID tags, or other data storage devices with limited transmit capability. If the tag 950 is blank, the tag may be programmed by device 810a in some cases. If the tag is already programmed, the communications device 810a may read information from the tag, which may lead to further action. For example, if the tag is associated with a printer, the communications device can run a print job on the printer.

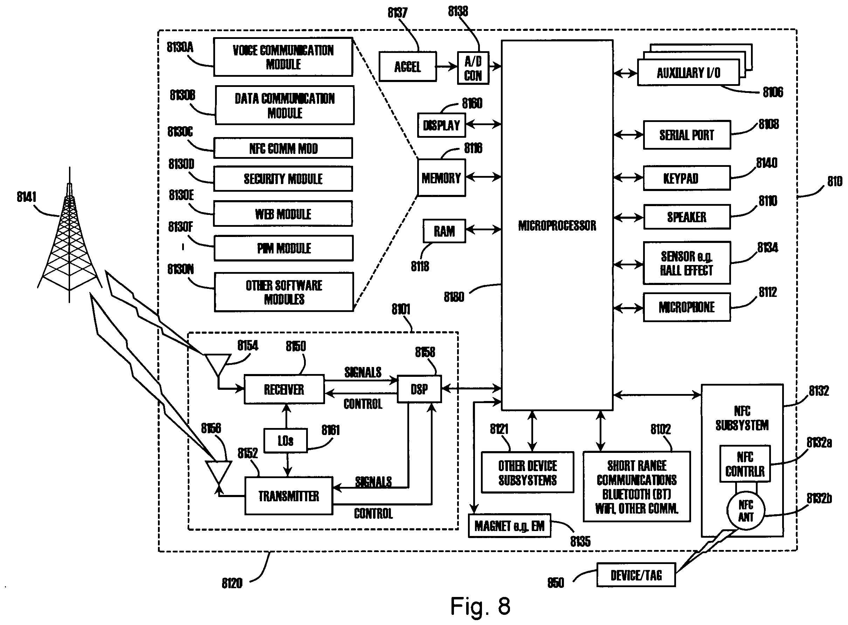

A non-limiting example of various functional components that may be used in the exemplary mobile wireless communications device 810 is further described in the example below with reference to **FIG. 8****.** Device 810 illustratively includes a housing 8120, a keypad 8140, inputs 8106, 8108, 8112, and outputs, such as output 8106, display 8160 and speaker 8110. The output 8160 may comprise a display, which may comprise a full graphic LCD, and/or may be touch sensitive as an input device. If the display is a touch-activated display, the keypad 8140 may not be necessary. Other types of output devices may alternatively be used.

A processor 8180, which may apply the specialized algorithms discussed throughout, and/or which may operate in conjunction with a specialized processor (not shown) in applying the algorithms, is contained within the housing 8120 and may be coupled between the keypad 8140, other inputs 8106, 8108, 8112, and outputs, such as outputs 8106, 8110 and display 8160. This processor 8180 is typically a microprocessor chip contained on a circuit board in the housing 8120. The processing device 8180 controls the operation of the display 8160, as well as the overall operation of the mobile device 810, in response to received information and inputs, such as in response to actuation of keys on the keypad 8140 by the user.

In addition to the processing device 8180, mobile device 810 includes a wireless communications subsystem 8101 comprising a transmitter 8152 and general antenna 8156, receiver 8150 and general antenna 8154, and digital signal processor (DSP) 8158; a short-range communications subsystem 8102, which may or may not have dedicated antenna systems for short-range aspects; specialized memory device 8116, memory device 8118 and various other device subsystems 8121. The mobile device 810 is, in this example, a two-way RF communications device having voice and data communications capabilities using RF circuitry. In addition, the mobile device 810 may have the capability to communicate with other computer systems via the Internet.. For example, device 810 may communicate with one or more servers, such as Internet servers, via RF subsystems 8101 and the associated components, including web module 8130e, and further via the short-range communications subsystem 8102, such as via web module 8130e. System 8102 includes, for example, a Bluetooth communications module for establishing a Bluetooth wireless connection, and other communications modules, such as an infrared modules or devices, WiFi circuits and modules, and associated components and circuits that may also form part of the RF circuitry.

Operating system software executed by the processing device 8180 may be stored in a persistent store, such as the memory 8116, or may be stored in other types of memory devices, such as a read only memory (ROM) or similar storage element. In addition, system software, specific device applications, or parts thereof, may be temporarily loaded into a volatile store, such as the random access memory (RAM) 8118. Communications signals received by the mobile device may also be stored in the RAM 8118, and data received, such as for an application, the operating system, etc., may be stored in memory 8116.

The processing device 8180, in addition to its operating system functions, may enable execution of software applications and modules 8130A-8130N stored at least partially on the device 810. A predetermined set of applications that control basic device operations, such as data and voice communications 8130A and 8130B, may be installed on the device 810 during manufacture. A Near Field Communications module 8130C is also installed as illustrated. Further, application modules may include native and non-native modules for security 8130D, Web interaction 8130E, social interactions or applications, and the like.

The NFC communications module 8130C, as a software module, may cooperate with NFC controller (which may itself include hardware, software, and firmware) 8132a and with the microprocessor 8180, such as through the memory 8116. Additionally, NFC communications module may, in embodiments, provide the responsive operability to tag reads/writes, whether virtual or physical, by interacting with other modules and apps to effect tag data, and/or to obtain or write tag data. Such other modules may particularly include web module 8130E, PIM module 8130F, and other software modules 8130N (such as apps and video players, by way of non-limiting example). The microprocessor 8180 may also cooperate with the NFC module 8130c (which may include the smart tag applications discussed hereinthroughout), and with the NFC subsystem 8132, which may include an NFC chip or chips that comprise NFC controller 8132a and antenna 8132b that may communicate with another device or tag 950, as discussed herein. The NFC communications module 8130C may allow the microprocessor to control the NFC subsystem 8132, which may be tuned to about 13.56 MHz, and/or the display 8160 and memory stores 8116, 8118.

The NFC chip may be, for example, a PN531 microcontroller-based transmission module from the Phillips Semiconductor Branch of Koninklijke Phillips Electronics N.V. When the NFC chip is a PN531 module, the NFC chip 8132a may include analog circuitry and a contact list Universal Asynchronous Receiver Transmitter (UART), a core and a set of host interfaces. The analog circuitry may include an output driver, an integrated demodulator, a bit decoder, a mode detector and an RF-level detector. The contact list UART may include elements for data processing, Cyclical Redundancy Checking (CRC), parity generation, framing generation and check bit coding and decoding. The core typically includes an 80C51 microcontroller, 32 Kbyte of ROM and one Kbyte of RAM. A set of host interfaces may interface with the microprocessor and interface according to such known standards as l2C, serial UART, SPI and USB.

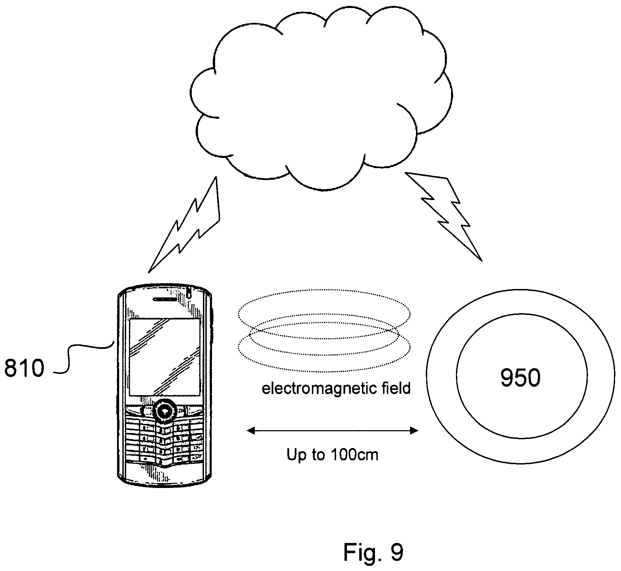

There is also illustrated a magnetic sensor 8134 that may act as a Hall Effect sensor and that may be communicatively connected to the microprocessor 8180. It includes the various components that operate as a Hall Effect sensor, including any necessary coils or other circuits. There is also illustrated a magnet 8135 that, in one exemplary implementation, is formed as an electromagnet and operates with the microprocessor 8180 to allow a different communications pathway using electromagnetic energy that is changed to correspond to changing data. Thus, although the electromagnet 8135 operates similarly to other magnets in the mobile wireless communications devices in **FIG. 4** and **FIG. 9**, it may operate, in one example, to form another communications protocol pathway. This electromagnet 8135 may have a plurality of different functions, including working as an active or passive device in association with other components of the device 810, as illustrated. For example, when the electromagnet 8135 is used in place of an installed magnet (non-electromagnetic) in the devices of **FIG. 7**, a pulse of energy is delivered to the Hall Effect sensor in the other device. The other device receiving the pulse may accordingly activate the NFC circuit. A WiFi connection, for example, in the alternative may be established if an NFC and/or Bluetooth connection is not established. Other software modules 8130N may include, for example, software that interoperates with the magnetic sensor 8134 and any magnet or electromagnet 8135 or other magnetic circuitry that are included within the overall electromagnet 8135.

An accelerometer 8137 and an analog/digital converter 8138 may be connected to the microprocessor 8180 as illustrated, and may allow another implementation of the NFC automatic tag detection (and automatic peer-to-peer detection). The accelerometer 8137 recognizes the tapping of a communications device against a tag or another device, thus recognizing at least one vibration. Instead of using the Hall Effect sensors and magnets to wake up the NFC circuit, the circuit uses tap recognition, for example, in the form of a vibration sensor and accelerometer in this example. It should be understood that when the device is tapped against another object, for example, an NFC tag as illustrated in **FIG. 9**, a profile is generated as a matter of certain accelerometer parameters being met or exceeded. If the profile is compared against a known tap profile, it will wake the NFC circuit and initiate communication. In other embodiments, the accelerometer may be part of a motion sensor system, and other motion sensor systems other than an accelerometer may be used, such as a cadence sensor or cadence detection system.

In addition, the personal information manager (PIM) application module 8130F may be or include a native module installed during manufacture. The PIM is capable of organizing and managing data items, such as email, contacts, calendar events, voice mails, appointments, and task items. The PIM application is also capable of sending and receiving data items via a wireless network. The PIM data items are seamlessly integrated, synchronized and updated via the wireless network with the device user's corresponding data items, such as may be stored in the cloud or as may be associated with a host computer system, for example.

Communication functions, including data and voice communications, may be performed through the communications subsystem 8101, and/or through the short-range communications subsystem 8102, which may be part of the circuitry contained in device 810. The specific design and implementation of the communications subsystems 8101 and 8102 may be dependent upon the communications network in which the mobile device 810 is intended to operate.

The communication functions may, as referenced above, be carried out by data module 8130b, voice module 8130a, and web module 8130d, including at the instruction of NFC module 8130c in accordance with the disclosed embodiments, with security for these communications, such as in the granting of access to PIM module 8130f, overseen by security module 8130d. As such, security module 8130d may include one or more native or non-native security applications, including anti-virus/anti-malware applications or functions, and protection of PIM information via applications or functions, during external interactions, may occur via NFC or via the Web, for example. Accordingly, security module 8130d may allow for degrees of security in interacting with other devices, such as the aforementioned tags, and/or other devices such as servers (herein defined to include any device acting as an Internet, intranet, extranet, or other public or private network node, host, server, or the like), and particularly with devices or aspects of a device that enable the occurrence of communication exchanges by the device occur over a network, such as the Internet.

In embodiments discussed herein, and as illustrated above with respect to FIG. 9, a physical NFC tag may be read by a reader device (also referred to herein as a "reader"), and/or written to by a writing device. The device may read or write data or information from or to the NFC tag, wherein the data or information may typically not include large volume data or information. A reader device may react accordingly based, at least in part, on information resident on the NFC tag. Further, a device may similarly read from or write to a virtual tag internal to the device, and/or may read from or write to a NFC communications module on another mobile device, such as via a camera-read of a bar code by the other device, or the like.

The disclosed embodiments may be operable using the afore-discussed active or passive NFC tags. As discussed, an active tag indicates a NFC tag capable of operating pursuant to its own power in the discussed embodiments. Conversely, a passive tag, as used herein, indicates one that operates responsive to the providing of an electric field from a reader device. Further, for the purposes of the instant discussion, tags may also be switchable between active and passive, such as responsive to the presence of a particular reader in proximity to the tag.

Moreover, and as referenced above, tags, as used herein, may include physical NFC tags and virtual tags (hereinafter also collectively referred to as "tags"), which virtual tags may reside within a device and which virtual tags, although not necessarily read from or written to a physical NFC tag, may be treated by the device as a read from or write to an NFC tag. That is, a virtual tag is a tag that may be organically read or written internal to the device, or that may result from the reading of a physical tag, or that may be intended to ultimately be written to a physical tag. For example, although a virtual NFC tag may not interact with NFC Subsystem 8132 in FIG. 8, the actions undertaken in accordance with the data and information read from or written to a virtual NFC tag may interact with, or cause interaction with, the remaining elements and systems of device 810 of FIG. 8 in the same manner as would be effectuated by a read from or write to a physical NFC tag, including interacting with NFC module 8130c, and with other modules out inputs/outputs of device 810 at the direction of NFC module 8130c.

Further, the NFC tag 950 in the exemplary embodiments may be any tag known to those skilled in the art, including but not limited to NFC tags, radio frequency identification ("RF ID") tags, 2D barcode tags, 3D barcode tags, QR code tags, holographic tags, or the like, that are capable of being read by a reading device. Accordingly, in particular exemplary embodiments and where noted herein, tags may also include one or more of the foregoing when provided from one mobile device to another, such as in the embodiments of FIGs. 4 and 7, and as discussed further below.

By way of non-limiting example, and as referenced above, mobile device 810 includes NFC transceiver module 8132, and an associated application or applications 8130A-N, including NFC communications module 8130C, suitable for interactions with physical or virtual smart-tags, smart accessories, and other NFC enabled devices. That is, an NFC smart tag application(s) may form part of NFC communications module and may interact externally to device 810, such as through the afore-discussed NFC transceiver subsystem 8132, with one or more tags, and may interact internally to device 810, such as via microprocessor 8180, with other aspects and modules of device 810.

By way of non-limiting example, certain Blackberry® devices from Research in Motion Limited of Ontario, Canada, are equipped with an embedded, native Smart Tag application suitable for obtaining the small amounts of data typically stored in an NFC tag, such as in conjunction with the data of the tag being stored in a memory 8116, 8118, wherein the Smart Tag application (i.e., NFC module 8130C) may provide for display on the device display 8160 of certain of the data that is read/written/stored in relation to the tag. As used herein, a native application is, as would be understood by those skilled in the art, an application designed for use on a particular device or platform. Further, an embedded application, as used herein and as would be understood by those skilled in the art, is an application embedded in the operating system for a particular device or platform. Although certain of the examples discussed herein may be made in reference to embedded and/or native tag reading and display applications, those skilled in the art will appreciate in light of the disclosure that the embodiments described may similarly be employed with non-native and/or non-embedded NFC reading and display applications.

Data transfer from an NFC tag may be limited in size and transfer rate, for example due to the limitations of the NFC tag's transmitter and the NFC tag's storage capability in comparison with, for example, common Bluetooth or WiFi devices. Consequently, the embedding of rich media, such as images, video, and the like on standard physical NFC tags may be inefficient, impractical, or even impossible.

The NFC Forum's NDEF specification defines data formats for NFC Forum compliant devices and tags, as discussed above. Information may be exchanged using the prior art in NDEF messages between applications running on devices that support NFC-Forum specifications and protocols, such as Blackberry or other smart phones. NFC Forum specifications are defined to support NDEF message reading, persisting, and exchanging between NFC enabled devices and tags. As of this writing, the NFC-Forum specifications, such as NFC Forum Tag Type Technical Specifications, NFC Simple NDEF Exchange Protocol (SNEP) specification, and other NFC forum specifications and standards, are downloadable from http://www.nfc-forum.org/specs/, and are hereby incorporated herein by reference in their entirety as if fully set forth.

Mobile devices equipped with NFC hardware and capabilities, such as Blackberry 10 devices, enable users to share information between devices using the afore-discussed simple tap, or "kiss," using the NFC-Forum's specifications and the NDEF format In accordance with the prior art, in order to achieve this information sharing application developers thus had to implement communication functionality using an NFC Application Programming Interface (API), and had to restrict shared information to NDEF message formats, in order to create and parse communicatable messages sent or received via NFC. Thus, to implement NFC capability in communicating applications, such as those preloaded on an Original Equipment Manufacturer (OEM) factory device build, and such as 3rd party, non-OEM developed applications, developers have typically experienced a learning curve to learn the NFC Forum's standards, formats and APls. Accordingly, developers have also devoted significant resources to make changes to every application intended to now use NFC, to enable a new or revised publication of the new application build, for example, in an application marketplace such as the Blackberry App World or the like.

In an aspect of the herein disclosed systems, apparatus, and methods, the challenge of adapting existing applications to NFC functionality may be addressed more readily by providing a NFC Share Framework Adaptor (the "Adaptor"). The Adaptor may not require application developers to use any NFC specific APls in most cases. The Adaptor may automatically wrap the payload of the sending application in an NDEF message on behalf of the application, inferring the proper message parameters from the message data and interacting with the NFC API on behalf of the calling application. Thereby, application developers can save the time and cost of modifying existing non-NFC applications for operation in NFC environments, and integration of applications to the NFC ecosystem.

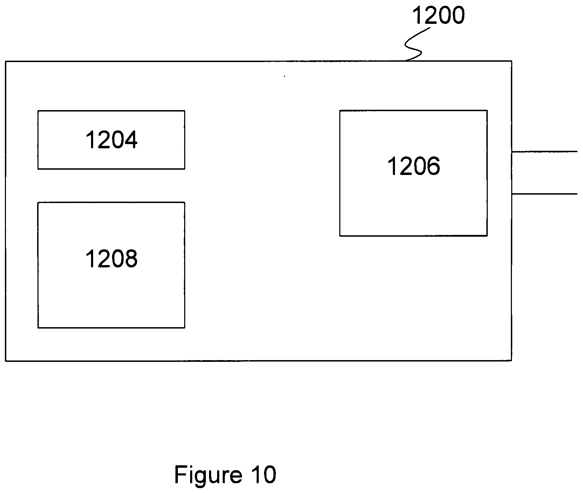

In an exemplary embodiment illustrated in **FIG. 10**, the NFC Share Framework Adaptor 1200 functions as a pluggable adaption to any application that uses, for example, application interface-invoking framework (herein defined to include a Java API for providing Web Services) and generic MIME type and data payload, to allow such application to share information in a genericized fashion. The Adaptor includes encapsulation/translation/file definition module 1204, which uses the data and data type to encapsulate a message in NFC format, and/or to send the message via NFC transport to another NFC capable device, thus allowing the sender and receiver applications to send a generic, NFC encapsulated message and to thus not be concerned with NFC specifics. Likewise, module 1204 may allow for the translation of files by Adaptor 1200, and/or for a definition of file type by Adaptor 1200, which embodiments are discussed further below. As such, Adaptor 1200 may include a send module 1206 for interfacing to a sending application to allow for the sending of converted, convertible, encapsulated, translated, or defined messages to an acknowledged NFC handler, or as a generic MIME type and data payload if the receiving application is not registered as an NFC handler or if the NFC suitability of the receiving application is unknown. The receiver application may also interface to a receiver module 1208 of Adaptor 1200 for receiving the information as either an NFC data type if the receiver application is an acknowledged NFC handler, or as a generic MIME type and data payload if the application is not registered as an NFC handler. As such, Adaptor 1200 may be included in software modules 8130N as shown in FIG. 8, and may be akin to an independent application that serves as a translating, encapsulating, defining, and/or converting intermediary that allows the sending and receiving of NFC messages using NFC hardware or non-NFC hardware from and to both NFC-enabled and non-NFC enabled applications.

The Adaptor of the sending and receiving devices thus abstracts, and/or hides the complexity of, the NFC API /NDEF message requirements from non NFC-enabled applications, resulting in more rapid and lower cost development and deployment of new NFC applications. The NFC Adaptor may be provided for various mobile terminal platforms, such as those using Blackberry, Android, Symbian or Microsoft mobile OS. As such, the Adaptor may preferably reside in NFC capable devices, such as to allow for NFC communications using the NFC Forum's standards, such as wherein the NFC standard hardware formats are "wrapped" around Java scripting, and accordingly wherein NFC devices can communicate using NFC (and thus take advantage of the security and proximity of NFC), but can communicate as between non-NFC applications using the wrapped generic, universal application-readable scripting, such as Java.

In the prior art, data-type conversion, translation, and/or definition has typically been used to encapsulate functionality that is common in specific use cases, thereby endeavoring to provide ease of use and decreased development time. Those skilled in the art will appreciate that the herein disclosed NFC Adaptor improves this ease of use and development time, and additionally provides an automated mechanism for inferring an NDEF message type, for example, based on the message content MIME type and payload, to thereby generate a corresponding and compatible NDEF message type that wraps the underlying data, and that is transported using NFC from one device to another.

Contrary to the presently disclosed Adaptor 1200, the prior art provides only specialized or dedicated adaptors, such as for accessing Facebook, for example, that accordingly implements solely functionality that ties-in message content to the requirements of a particular vendor's site or application. The prior art accomplishes this by implementing the sent API as a client of a given vendor, and passes content to and from the vendor's site. In contrast, the present Adaptor 1200 generates NDEF content based on a given mime type and payload, encapsulates the content in an implementation of the NFC API, and provides NFC transport, all transparently to the sender application. The NFC Adaptor can thus interact with any application using the application interface-invoking framework. The application interface-invoking framework is among the services provided on a mobile device, such as, for example, as part of the default platform services provided on Blackberry 10 devices. The application interface-invoking framework supports an API for invoking NFC services, regardless of how or where the services are provided. The framework thus allows maximum flexibility for NFC service, including, using the Adaptor 1200, for NFC services between NFC devices communicating in a non-NFC application.

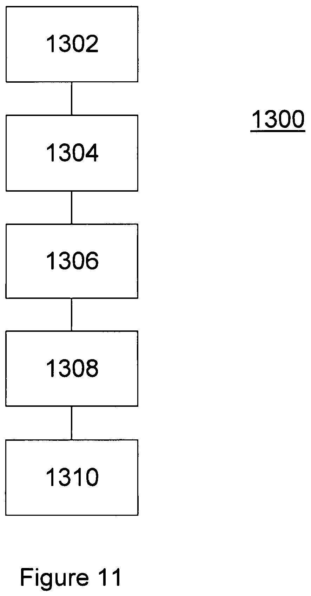

In an exemplary methodology 1300 illustrated in **FIG. 11**, a user may wish to share information, such as a web page, with a friend using their NFC enabled mobile devices, at step 1302. To do so, the sending application, such as the browser application in this example, on the NFC capable mobile need not implement the NFC API directly, but rather may simply pass the data to be transmitted, such as the URL of the page, to the NFC Adaptor 1200 at step 1304. The Adaptor of the device infers, at step 1306, the preferred encapsulation, definition, or translation using the encapsulation module, such as that the URL fits best in a Smart Poster or URL NDEF message type, and generates such a message encapsulating, defining, or translating the data for transmission, such as the given URL, at step 1308. The Adaptor then passes the message, such as using the NFC API on behalf of the sending application, to the transmitting module, such as the NFC transmission module, for transmission at step 1310. The receiving device then receives and reads the message, such as the NDEF message, and the Adaptor on the receiving device may launch an appropriate handler using the application interface-invoking framework, such as so that the Browser on the receiver device will open the referenced URL.

In addition, to send an NDEF message from one NFC enabled device to another or to an NFC Tag, an NFC capable sending application may select a specific NFC transport technology, either in conjunction with, or without use of, the Adaptor 1200. For example, an NFC enabled device may either write an NDEF message to a tag, or can emulate a tag, or support SNEP push over a LLCP connection, depending on the circumstances, and NFC capable sending and receiving applications can readily communicate using such NDEF message formats. However, initially developing an application to support all of the plurality of NFC transports is challenging, at least in part because it requires NFC knowledge sufficient to support each transport, and different NFC APls must be used for different transports.

In an aspect of the herein disclosed systems, apparatus, and methods, the NFC Adaptor 1200 may be implemented to discover and concurrently support all available NFC technologies and transports for NDEF exchanges, such as NDEF Tag read/write, SNEP Push, and tag emulation. Accordingly, using the Adaptor, NDEF messages may be exchanged between sending and receiving applications simply, without exposing the applications to the details of the various NFC technologies, and using the best NFC transport for the task at hand.

In an exemplary operation, when two NFC capable devices are in close proximity, all available NFC transports may be discovered between the two devices. The Adaptor on the sending (local) device may negotiate with the Adaptor at the receiving (remote) device to select a preferred NFC technology to share the NDEF message with the remote device or tag. For instance, when a target NFC tag is detected, a capable local device may write an NDEF message to the tag. If instead the receiving device supports SNEP PUT protocol, the NDEF message may be pushed. Also, the local device may emulate a virtual tag having an NDEF message, which may be read by the receiving device. Likewise, if the local, sending device wishes to communicate using NFC and wishes to communicate with a non-NFC receiving application on the receiving device, the Adaptor may encapsulate genericized, such as Java, messages to be transmitted to the receiving device within an NDEF message format. In this way, NDEF messages may be shared between NFC devices using the best NFC technology and transport for the situation.

Adaptor 1200 may also allow for various additional modifications, transmissions of, and receptions of NFC messages and/or NFC encapsulated non-NFC messages. For example, in an aspect of the herein disclosed systems, apparatus, and methods, remote dispatch of NFC NDEF messages may be provided over e-mail transport. In an exemplary implementation, the Adaptor may indicate that an NDEF message be saved by the sender as a file with an extension, such as ".ndef", and sent to the receiving device using a communications technology other than NFC, for example, via e-mail as an attachment. When the .ndef file attachment is received by the email service on the target device, it is recognized by the receiving Adaptor 1200 and dispatched to the NFC service process running on the target device. The target NFC service then extracts the NDEF message from the file and dispatches it to an appropriate NFC application, just as if the NDEF message had been received using NFC wireless communication alone. In an exemplary operation, a non-NFC application may receive Wi-Fi profile/configuration credentials on the receiving device, produced by an NFC application on a sending device, and may thereafter automatically connect to a Wi-Fi network using the credentials.

Additional exemplary uses may include, for example, sharing remotely a retailer coupon that was obtained using NFC technology; sharing remotely a NFC SmartPoster Tag; sharing remotely any custom NDEF message between two instances of the 3rd party application, or the like. For example, the Evernote application by Evernote Corp. has its own proprietary "Note" object that represents a specific note, such as a reminder. The information contained in that object can be represented in NDEF format, so that the sender can share the Note with a receiver. The Note may then be shared via NFC transport, e.g., by tapping the sender and receiver devices together. However, in accordance with the herein disclosed systems, methods, and apparatus, the Note may also be shared by sending the NDEF message using a different communications technology, such as via e-mail as an attachment to the receiving device. The receiving device then doesn't need to be in close proximity to the sending device, and doesn't need to have an NFC antenna.

Alternatively, NFC transport may be used to perform a simple email address exchange between NFC enabled devices. The file that is to be shared may then be sent via email as an attachment in the usual manner. For example, an NFC enabled laptop could be "tagged" by a Blackberry or other smart phone to exchange e-mail addresses. A large file can then be emailed by either party to the other. Of course, in such instances, it may be preferably that all involved devices be equipped with Adaptor 1200.

In another aspect of the herein disclosed systems, apparatus, methods, NFC communications may employ the Adaptor 1200 to initiate a sequence of events, for example, to establish communications using a communication technology other than NFC. In an exemplary operation, two NFC enabled Blackberrys or other smart phones may be tapped together to initiate NFC communication via an NFC link. Information of another desired connection may then be shared via the NFC link, such as Bluetooth pairing data, wi-fi network access data, peer-to-peer networking, instant messaging, Skype, or the like. The Adaptor may then select or determine, based, for example, on what the sending user is currently viewing, what data will be sent using the other connection. The Adaptor may, of course, confirm in some manner with the user that she wishes to send the selected data, such as for security and/or error-prevention purposes. Finally, the communicating devices may automatically use the connection information to set up the desired other connection, and may send the data indicated by the Adaptor 1200 using the other connection. In an embodiment, these steps may also be accomplished without user involvement, and in fact without the user even knowing the exchange has occurred.

As previously described, a WiFi, Bluetooth, peer-to-peer, or other communication access message can be passed in NDEF format to a remote device, for example, such as by encapsulation by the Adaptor into an NDEF message of the connection information for transport via NFC, and/or by encapsulation of the connection information into a file that may be transported by other means, such as by attachment to an email. Alternatively, at the direction of the Adaptor a handover NDEF message can be sent that allows the receiving device to connect, for example, to a Wi-Fi hotspot using secure credentials without the user having to tap the device to an NFC tag or the like to receive the credentials.

In addition, an encapsulated or type-defined NDEF message may initiate a sequence of events. For example, when booking a hotel room, a user may receive an email with a booking reference number, and, if Wi-Fi access is prearranged for use during their stay, the email can contain an NDEF handover message attachment which, when opened, will automatically set up the necessary Wi-Fi network configuration on the user's device. Thereafter, when the user walks into the hotel, she may automatically, or subject to user confirmation, be connected to hotel's Wi-Fi network without the user having to perform any particular activation actions, and without need for concern over the capabilities of the applications resident on the user's device.

Similarly, when a Bluetooth accessory is purchased for use with an NFC enabled mobile, pairing information may be emailed to the user to connect to the accessory without having to go through Bluetooth setup steps. Alternatively, an NFC tag may be provided with the Bluetooth accessory, either with its packaging or as part of the accessory itself, to convey the pairing information to the host device.

Thereby, and as described previously, in an embodiment of the disclosure a low level platform mechanism may be used to remotely pass an NDEF message, which may encapsulate a non-NFC application message, between two devices as a file, such as by providing the packaging into and remote dispatching of an NDEF message. In additional embodiments, and as described above, an application level mechanism may use the packaging and transport mechanism to implement higher level application-based functionality, such as remote handover to WiFi, Bluetooth, or the like, using NDEF encapsulated and/or NDEF defined messages. Such embodiments may preferably be performed by the disclosed Adaptor 1200.

In an exemplary operation, certificates, keys, or other credentials providing access rights to a network can be pushed to users based, for example, on participation in an event, such as a training event. The participants may be invited to the event by various means, such as by corporate e-mail, or via a social network site such as Facebook. While at the event, participants may attach to a secured network, such as to obtain training materials. The foregoing may be accomplished by file translation, file definition, and/or file encapsulating by a sending and receiving Adaptor 1200.

For example, the host network may be set up to support an event in accordance with a preset schedule. Participant credentials may include a temporary name and password, which may be automatically added to WiFi credentials upon the commencement of the event, and automatically deleted when the event has ended. During the event (at the preset date and time) the network may automatically activate the temporary names and passwords corresponding to the participants. When the event is complete, the temporary credentials may automatically expire or be revoked or deleted. For additional security, participants may be prompted to allow their devices to be registered with the event. The network may be configured allow access to some or all network resources only to those MAC address that have been registered.

In a further aspect of the herein disclosed systems, apparatus, and methods, remote dispatch of NFC NDEF messages may be accomplished over Bluetooth transport. It is well known that NFC communication is slower than Bluetooth communication. In practice, sending a NDEF message of 20KB via NFC from one device to another requires the devices to remain in close proximity with each other for approximately 5-10 seconds, which can be inconvenient. Thus, while most NDEF messages are small (less than 4KB), there are occasions where NDEF messages can be much larger.

In those cases, if the sending and receiving devices are most Bluetooth capable, the NDEF message may be saved by the Adaptor as a file with an extension, such as ".ndef", on the sending device, and the file can be sent to the target device over a Bluetooth connection. Negotiation and activation of a Bluetooth connection between the two communicating devices can occur with the help of an NFC-Bluetooth connection handover process. The process can be triggered when the two devices are kept together. Similarly to the case in which the .ndef file is sent via e-mail, described previously, when the .ndef file is received by the Bluetooth service on the target device it is recognized and dispatched to the NFC service. The NFC service obtains the NDEF message from the file, and dispatches it to the appropriate NFC application, just as if the NDEF message had been received using only NFC wireless communication. In an exemplary operation, contact information may be transferred in this manner, such as in a vCard format. Such information may include a photograph, resulting in a relatively large data transfer that may be impractical using only NFC communications, but convenient using Bluetooth.

While the systems and methods disclosed herein have been discussed in relation to Near Field Communication technology, it should be understood that same systems and methods may be applied to other technology which may be similar in some respects such as, for example, other forms of short range communication technology.

In related aspects, the apparatus disclosed herein may include additional processor components, which may be in operative communication with other components via buses or via similar communication coupling. The respective processors may affect some or all of the processing of, and/or the initiation and/or scheduling of, the processes and/or functions performed by the electrical components discussed throughout.

In other related aspects, exemplary apparatuses as described herein may include additional radio transmitter/receiver components. The apparatuses may also include or include additional network interfaces and/or network controllers (not shown) for connecting to one or more network entities. The disclosed apparatuses may optionally include additional components for storing information, such as, for example, a memory device/computer readable medium, or other computer readable medium such as a magnetic or optical drive. Such computer readable media may be operatively coupled to the processor(s), memory component(s), or other components of the apparatuses, such as via busses or the like. Such data storage components may be adapted to store computer readable instructions and data for affecting the processes and behavior of the components described in each of the apparatuses, and subcomponents thereof, and/or the processors, and/or the methods disclosed herein. The memory components described herein may retain instructions for executing functions associated with various components of the apparatuses. While shown as being distinct from the memory and processing components, it is to be understood that one or more of the other components may be realized within or in cooperation with the memory and processing components illustrated. It is further noted that the components shown may comprise their own respective processors, electronic devices, hardware devices, electronic sub-components, logical circuits, memories, software codes, firmware codes, etc., or any combination thereof.

Information and signals discussed herein may be represented using any of a variety of techniques. More particularly, data, instructions, commands, actions, information, signals, or symbols that may be referenced herein may be realized using, or may at least in part represent, voltages, currents, electromagnetic waves, magnetic fields or particles, optical fields or particles, or any combination thereof.

Further, the various illustrative logical blocks, modules, circuits, methods and algorithm steps described in connection with the herein disclosed devices, systems, and methods may be implemented using specialized or general purpose electronic hardware and/or software. Because the devices, systems, and methods described herein may be implemented in a variety of manners and constructions, the various illustrative components, blocks, modules, circuits, and steps have been described above generally in terms of their functionality. Whether such functionality is implemented in hardware alone or in combination with software or the like (e.g., firmware) depends upon the particular application, skill of the artisan, and design constraints imposed on the overall system.

The various illustrative logical blocks, modules, and circuits described herein may be implemented or performed using one or more processors, digital signal processors (DSPs), application specific integrated circuits (ASICs), field programmable gate arrays (FPGAs) and/or other programmable logic devices, discrete gates or transistor logic, discrete hardware components, or any combination thereof capable of implementing the methods and algorithms and performing the functions described herein. A general-purpose processor may be a microprocessor, but in the alternative, the processor may be or include any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

Software modules, computer readable data, computer readable instructions, and the like, discussed herein may reside in RAM memory, flash memory, ROM memory, EPROM memory, EEPROM memory, registers, hard disk, a removable disk, a CD-ROM, or any other form of volatile or non-volatile solid state, magnetic, optical, or other processor or computer readable data storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

If the designs herein are at least partially implemented in software, the functions may be stored or transmitted as one or more instructions or code in a non-transitory manner on or using at least one computer-readable medium. Computer-readable media may include both computer storage media and communication media, including any medium that facilitates transfer of a computer program, action, or other computer readable data from one place to another. A storage medium may be or include any medium that can be accessed and processed by a general purpose or special purpose computer. Also, any connective hardware may be considered to be within the scope of a computer-readable medium. For example, if information is transmitted from a website, server, or other remote source using a coaxial cable, fiber optic cable, twisted pair, digital subscriber line (DSL), or wireless technologies such as infrared, radio, microwave, or the like, then the coaxial cable, fiber optic cable, twisted pair, DSL, or wireless technologies such as infrared, radio, microwave, or the like may be included in the definition of medium.

Additionally provided herein are a series of particular exemplary applications and/or embodiments illustrative of the applicability of aspects of the herein disclosed devices, systems, and methods in a variety of contexts. As will be appreciated in light of the instant disclosure, the disclosure is not limited to these examples, but rather is inclusive of all embodiments for which the illustrative aspects described herein may be realized.

Those of skill in the art will appreciate that the herein described systems and methods may be subject to various modifications and alternative constructions. There is no intention to limit the scope of the disclosure to the specific exemplary embodiments, applications, and/or constructions described herein.

## Claims

1. A Near Field Communication, NFC, device (810), comprising an NFC adaptor (1200), the NFC adaptor (1200) comprising:
a message receiver (1208) executable on a computer processor (8180) of the NFC device, operable to receive a message from one or more of a plurality of applications running on the NFC device;
a parser executable on the computer processor (8180), operable to parse the received message, identify payload data of the received message, and determine a type of the payload data;
an encapsulator (1204) executable on the computer processor (8180), operable to encapsulate the parsed, received message into an encapsulated message suitable for NFC transmission, wherein the encapsulated message comprises an NFC Data Exchange Format, NDEF, message and the encapsulator (1204) determines one or more parameters of the NDEF message from the identified payload data and the determined type of the payload data; and
a send module (1206), suitable to transmit the encapsulated message to a transmission module for transmission, wherein
the encapsulator further comprises a file forming module, operable to save the NDEF message as a file having a file name with a file extension; and
the send module further comprises a message generator, operable to select an available communications link, generate a message to be sent using the selected communications link, attach the file to the generated message, and dispatch the message for transmission via the selected available communications link, the device further comprising:
a receiver, operable to receive a message with a file attachment using an available communications link other than NFC;
a dispatcher operable to recognize the file attachment as a NDEF message, extract the NDEF message from the file attachment; and dispatch the extracted NDEF message to an application of the one of more applications.

2. The device (810) of claim 1, wherein the parsed message is encapsulated by wrapping the payload data in an NFC Data Exchange Format, NDEF, wrapper.

3. The device (810) of claim 1, wherein the send module interacts with an NFC application programming interface, API, on behalf of the one or more applications.

4. The device (810) of claim 1, further comprising:
a receiver, operable to receive a message;
the parser being operable to parse the received message, identify the received message as one of an NFC data type and a generic mime type, and pass the parsed received message to a correspondent message handler.

5. The device (810) of claim 1, wherein an operating system interfacing with the adaptor (1200) is one of Blackberry OS, Android, Symbian or Microsoft mobile OS.

6. The device (810) of claim 1, wherein the encapsulator interacts with the one or more applications via an application interface-invoking framework.

7. The device (810) of claim 1, further comprising:
an NFC transport detector that discovers NFC transports available for NDEF ones of the encapsulated message.

8. The device (810) of claim 7, wherein the detected transports include at least one of NDEF Tag read/write, SNEP Push, and tag emulation.

9. The device (810) of claim 7, further comprising:
an NFC transport negotiator that selects at least one of the detected transports to use for NFC communications, and that negotiates with another NFC device (810) to establish an NFC communications link.

10. The device (810) of claim 1, wherein the file extension is ".ndef".

11. The device (810) of claim 1, wherein the communications link other than NFC uses at least one of email, Bluetooth, instant messaging, and Skype.

12. The device (810) of claim 1, further comprising:
a handover message forming module executable on the processor, operable to form an encapsulated message comprising an NDEF message that includes non-NFC communication access information sufficient to set up a communication session using a corresponding non-NFC communication link.

13. The device (810) of claim 12, wherein the non-NFC communication link uses one of WiFi, Bluetooth, peer-to-peer, and instant messaging.

14. The device (810) of claim 12, wherein the NDEF message includes a plurality of commands that will initiate a sequence of events on the second NFC device.

15. A method of providing adaption for Near Field Communication, NFC, for use in an NFC device (810), comprising:
receiving, by a message receiver (1208), a message from one or more of a plurality of applications running on the NFC device (810);
parsing, by a parser, the received message to identify payload data of the received message and determine a payload data type of the payload data;
encapsulating, by an encapsulator (1204), the parsed, received message into an encapsulated message suitable for NFC transmission, wherein the encapsulated message comprises an NFC Data Exchange Format, NDEF, message and one or more parameters of the NDEF message are determined from the identified payload data and the determined type of the payload data; and
sending, by a send module (1206), the encapsulated message to a transmission module suitable for an encapsulated message type, the method further comprising the steps of:
saving, by a file forming module, the NDEF message as a file having a file name with a file extension; and
selecting, by a message generator, an available communications link, generating a message to be sent using the selected communications link, attaching the file to the generated message, and dispatching the message for transmission via the selected available communications link;
receiving, by a receiver, a message with a file attachment using an available communications link other than NFC;
recognizing, by a dispatcher, the file attachment as a NDEF message, extracting the NDEF message from the file attachment, and dispatching the extracted NDEF message to an application of the one or more applications.

16. The method of claim 15, wherein the transmission module comprises an NFC transmission module.

## Patentansprüche

1. Nahfeldkommunikations(NFC)-Vorrichtung (810), die einen NFC-Adapter (1200) umfasst, wobei der NFC-Adapter (1200) Folgendes umfasst:
einen Nachrichtenempfänger (1208), der auf einem Computerprozessor (8180) der NFC-Vorrichtung ausführbar ist, betreibbar, eine Nachricht von einer oder mehreren einer Vielzahl von Anwendungen, die auf der NFC-Vorrichtung laufen, zu empfangen;
einen Parser, der auf dem Computerprozessor (8180) ausführbar ist, betreibbar, die empfangene Nachricht zu parsen, Nutzlastdaten der empfangenen Nachricht zu identifizieren und einen Typ der Nutzlastdaten zu bestimmen;
einen Kapseler (1204), der auf dem Computerprozessor (8180) ausführbar ist, betreibbar, um die geparste empfangene Nachricht in eine gekapselte Nachricht, die für eine NFC-Übertragung geeignet ist, zu kapseln, wobei die gekapselte Nachricht eine NFC-Datenaustauschformat(NDEF)-Nachricht umfasst und der Kapseler (1204) anhand der identifizierten Nutzlastdaten und des bestimmten Typs der Nutzlastdaten einen oder mehrere Parameter der NDEF-Nachricht bestimmt; und
ein Sendemodul (1206), das geeignet ist, die gekapselte Nachricht zur Übertragung zu einem Übertragungsmodul zu übertragen, wobei
der Kapseler ferner ein Dateibildungsmodul umfasst, das betreibbar ist, die NDEF-Nachricht als eine Datei zu speichern, die einen Dateinamen mit einer Dateierweiterung umfasst; und
das Sendemodul ferner einen Nachrichtenerzeuger umfasst, der betreibbar ist, eine verfügbare Kommunikationsverbindung auszuwählen, eine Nachricht, die unter Verwendung der ausgewählten Kommunikationsverbindung zu senden ist, zu erzeugen, die Datei an die erzeugte Nachricht anzuhängen und die Nachricht zur Übertragung via die ausgewählte verfügbare Kommunikationsverbindung abzuschicken, wobei die Vorrichtung ferner Folgendes umfasst:
einen Empfänger, der betreibbar ist, eine Nachricht mit einem Dateianhang unter Verwendung einer anderen verfügbaren Kommunikationsverbindung als NFC zu empfangen;
einen Abschicker, der betreibbar ist, den Dateianhang als eine NDEF-Nachricht zu erkennen, die NDEF-Nachricht aus dem Dateianhang zu extrahieren und die extrahierte NDEF-Nachricht an eine Anwendung der einen oder der mehreren Anwendungen abzuschicken.

2. Vorrichtung (810) nach Anspruch 1, wobei die geparste Nachricht durch Einhüllen der Nutzlastdaten in eine NFC-Datenaustauschformat(NDEF)-Hülle gekapselt wird.

3. Vorrichtung (810) nach Anspruch 1, wobei das Sendemodul im Namen der einen oder der mehreren Anwendungen mit einer NFC-Anwendungsprogrammierungsschnittstelle, API, interagiert.

4. Vorrichtung (810) nach Anspruch 1, die ferner Folgendes umfasst:
einen Empfänger, der betreibbar ist, eine Nachricht zu empfangen;
wobei der Parser betreibbar ist, die empfangene Nachricht zu parsen, die empfangene Nachricht als einen eines NFC-Datentyps und eines generischen MIME-Typs zu identifizieren und die geparste empfangene Nachricht an einen entsprechenden Nachrichtenhandhaber weiterzugeben.

5. Vorrichtung (810) nach Anspruch 1, wobei ein Betriebssystem, das an den Adapter (1200) gekoppelt ist, eines von Blackberry OS, Android, Symbian oder Microsoft Mobile OS ist.

6. Vorrichtung (810) nach Anspruch 1, wobei der Kapseler mit der einen oder den mehreren Anwendungen via ein Rahmenwerk zum Aufrufen einer Anwendungsschnittstelle interagiert.

7. Vorrichtung (810) nach Anspruch 1, die ferner Folgendes umfasst:
einen NFC-Transportdetektor, der die NFC-Transporte, die für NDEF-Transporte der gekapselten Nachricht verfügbar sind, entdeckt.

8. Vorrichtung (810) nach Anspruch 7, wobei die detektierten Transporte mindestens eines von NDEF-Tag lesen/schreiben, SNEP Push und Tagemulation beinhalten.

9. Vorrichtung (810) nach Anspruch 7, die ferner Folgendes umfasst:
einen NFC-Transportverhandler, der mindestens einen der detektierten Transporte, die für eine NFC-Kommunikation zu verwenden sind, auswählt und der mit einer anderen NFC-Vorrichtung (810) verhandelt, um eine NFC-Kommunikationsverbindung herzustellen.

10. Vorrichtung (810) nach Anspruch 1, wobei die Dateierweiterung ".ndef" ist.

11. Vorrichtung (810) nach Anspruch 1, wobei die andere Kommunikationsverbindung als NFC mindestens eines von E-Mail, Bluetooth, Instant Messaging und Skype verwendet.

12. Vorrichtung (810) nach Anspruch 1, die ferner Folgendes umfasst:
ein Übergabenachrichtenbildungsmodul, das auf dem Prozessor ausführbar ist, betreibbar, um eine gekapselte Nachricht zu bilden, die eine NDEF-Nachricht umfasst, die Nicht-NFC-Kommunikationszugangsinformationen beinhaltet, die ausreichend sind, um eine Kommunikationssitzung unter Verwendung einer entsprechenden Nicht-NFC-Kommunikationsverbindung einzurichten.

13. Vorrichtung (810) nach Anspruch 12, wobei die Nicht-NFC-Kommunikationsverbindung eines von WiFi, Bluetooth, Peer-to-Peer und Instant Messaging verwendet.

14. Vorrichtung (810) nach Anspruch 12, wobei die NDEF-Nachricht eine Vielzahl von Befehlen beinhaltet, die eine Sequenz von Ereignissen auf der zweiten NFC-Vorrichtung initiieren.

15. Verfahren zum Bereitstellen einer Anpassung für eine Nahfeldkommunikation, NFC, zur Verwendung in einer NFC-Vorrichtung (810), das Folgendes umfasst:
Empfangen einer Nachricht durch einen Nachrichtenempfänger (1208) von einer oder mehreren einer Vielzahl von Anwendungen, die auf der NFC-Vorrichtung (810) laufen;
Parsen der empfangenen Nachricht durch einen Parser, um Nutzlastdaten der empfangenen Nachricht zu identifizieren und einen Nutzlastdatentyp der Nutzlastdaten zu bestimmen;
Kapseln der geparsten empfangenen Nachricht durch einen Kapseler (1204) in eine gekapselte Nachricht, die für eine NFC-Übertragung geeignet ist, wobei die gekapselte Nachricht eine NFC-Datenaustauschformat(NDEF)-Nachricht umfasst und anhand der identifizierten Nutzlastdaten und des bestimmten Typs der Nutzlastdaten ein oder mehrere Parameter der NDEF-Nachricht bestimmt werden; und
Senden der gekapselten Nachricht durch ein Sendemodul (1206) an ein Übertragungsmodul, das für einen gekapselten Nachrichtentyp geeignet ist, wobei das Verfahren ferner die folgenden Schritte umfasst:
Speichern der NDEF-Nachricht durch ein Dateibildungsmodul als eine Datei, die einen Dateinamen mit einer Dateierweiterung aufweist; und
Auswählen einer verfügbaren Kommunikationsverbindung, Erzeugen einer Nachricht, die unter Verwendung der Kommunikationsverbindung zu senden ist, Anhängen der Datei an die erzeugte Nachricht und Abschicken der Nachricht zur Übertragung via die ausgewählte verfügbare Kommunikationsverbindung durch einen Nachrichtenerzeuger;
Empfangen einer Nachricht mit einem Dateianhang unter Verwendung einer anderen verfügbaren Kommunikationsverbindung als NFC durch einen Empfänger;
Erkennen des Dateianhangs als eine NDEF-Nachricht, Extrahieren der NDEF-Nachricht aus dem Dateianhang und Abschicken der extrahierten NDEF-Nachricht an eine Anwendung der einen oder der mehreren Anwendungen durch einen Abschicker.

16. Verfahren nach Anspruch 15, wobei das Übertragungsmodul ein NFC-Übertragungsmodul umfasst.

## Revendications

1. Dispositif de communication en champ proche, NFC, (810), comprenant un adaptateur (1200) NFC, l'adaptateur (1200) NFC comprenant :
un récepteur de message (1208) exécutable sur un processeur informatique (8180) du dispositif NFC, pouvant fonctionner pour recevoir un message à partir d'une ou plusieurs parmi une pluralité d'applications en cours d'exécution sur le dispositif NFC ;
un analyseur syntaxique exécutable sur le processeur informatique (8180), pouvant fonctionner pour analyser le message reçu, identifier des données de charge utile du message reçu, et déterminer un type des données de charge utile ;
un encapsuleur (1204) exécutable sur le processeur informatique (8180), pouvant fonctionner pour encapsuler le message analysé reçu dans un message encapsulé approprié pour une transmission NFC, dans lequel le message encapsulé comprend un message en format d'échange de données NFC, NDEF, et l'encapsuleur (1204) détermine un ou plusieurs paramètres du message NDEF à partir des données de charge utile identifiées et du type déterminé des données de charge utile ; et
un module d'envoi (1206), approprié pour transmettre le message encapsulé à un module de transmission pour transmission, dans lequel
l'encapsuleur comprend en outre un module de formation de fichier, pouvant fonctionner pour enregistrer le message NDEF en tant que fichier ayant un nom de fichier avec une extension de fichier ; et
le module d'envoi comprend en outre un générateur de messages, pouvant fonctionner pour sélectionner une liaison de communication disponible, générer un message à envoyer en utilisant la liaison de communication sélectionnée, joindre le fichier au message généré, et répartir le message pour transmission via la liaison de communication disponible sélectionnée, le dispositif comprenant en outre :
un récepteur, pouvant fonctionner pour recevoir un message avec un fichier joint en utilisant une liaison de communication disponible autre que la NFC ;
un répartiteur pouvant fonctionner pour reconnaître le fichier joint en tant que message NDEF, extraire le message NDEF du fichier joint ; et répartir le message NDEF extrait vers une application des une ou plusieurs applications.

2. Dispositif (810) selon la revendication 1, dans lequel le message analysé est encapsulé en contenant les données de charge utile dans un conteneur en format d'échange de données NFC, NDEF.

3. Dispositif (810) selon la revendication 1, dans lequel le module d'envoi interagit avec une interface de programmation d'application NFC, API, pour le compte des une ou plusieurs applications.

4. Dispositif (810) selon la revendication 1, comprenant en outre :
un récepteur, pouvant fonctionner pour recevoir un message ;
l'analyseur syntaxique, qui peut fonctionner pour analyser le message reçu, identifier le message reçu en tant que l'un parmi un type de données NFC et un type MIME générique, et passer le message analysé reçu à un gestionnaire de messages correspondant.

5. Dispositif (810) selon la revendication 1, dans lequel un système d'exploitation en interface avec l'adaptateur (1200) est l'un parmi Blackberry OS, Android, Symbian ou Microsoft mobile OS.

6. Dispositif (810) selon la revendication 1, dans lequel l'encapsuleur interagit avec les une ou plusieurs applications via un cadre d'appel d'interface d'application.

7. Dispositif (810) selon la revendication 1, comprenant en outre :
un détecteur de transport NFC qui découvre les transports NFC disponibles pour les NDEF du message encapsulé.

8. Dispositif (810) selon la revendication 7, dans lequel les transports détectés comportent au moins l'un parmi une lecture/écriture de balises NDEF, un SNEP Push, et l'émulation de balises.

9. Dispositif (810) selon la revendication 7, comprenant en outre :
un négociateur de transport NFC qui sélectionne au moins un des transports détectés à utiliser pour la communication NFC, et qui négocie avec un autre dispositif NFC (810) pour établir une liaison de communication NFC.

10. Dispositif (810) selon la revendication 1, dans lequel l'extension de fichier est « .ndef ».

11. Dispositif (810) selon la revendication 1, dans lequel la liaison de communication autre que la NFC utilise au moins l'un parmi le courrier électronique, Bluetooth, la messagerie instantanée et Skype.

12. Dispositif (810) selon la revendication 1, comprenant en outre :
un module de formation de message de transfert exécutable sur le processeur, pouvant fonctionner pour former un message encapsulé comprenant un message NDEF qui comporte des informations d'accès à la communication non NFC, suffisante pour mettre en place une session de communication en utilisant une liaison de communication non NFC correspondante.

13. Dispositif (810) selon la revendication 12, dans lequel la liaison de communication non NFC utilise l'un parmi le Wifi, Bluetooth, le poste à poste et la messagerie instantanée.

14. Dispositif (810) selon la revendication 12, dans lequel le message NDEF comporte une pluralité d'instructions qui vont initier une séquence d'événements sur le second dispositif NFC.

15. Procédé fournissant une adaptation pour une communication en champ proche, NFC, destiné à être utilisé dans un dispositif NFC (810), comprenant les étapes consistant à :
recevoir, par un récepteur de message (1208), un message à partir d'une ou plusieurs d'une pluralité d'applications en cours d'exécution sur le dispositif NFC (810) ;
analyser, par un analyseur syntaxique, le message reçu pour identifier des données de charge utile du message reçu et déterminer un type de données de charge utile des données de charge utile ;
encapsuler, par un encapsuleur (1204), le message analysé reçu dans un message encapsulé approprié pour transmission NFC, dans lequel le message encapsulé comprend un message en format d'échange de données NFC, NDEF, et un ou plusieurs paramètres du message NDEF sont déterminés à partir des données de charge utile identifiées et du type déterminé des données de charge utile ; et
envoyer, par un module d'envoi (1206), le message encapsulé à un module de transmission approprié pour un type de message encapsulé, le procédé comprenant en outre les étapes consistant à :
enregistrer, par un module de formation de fichier, le message NDEF en tant que fichier ayant un nom de fichier avec une extension de fichier ; et
sélectionner, par un générateur de messages, une liaison de communication disponible, générer un message à envoyer en utilisant la liaison de communication sélectionnée, joindre le fichier au message généré, et répartir le message pour transmission via la liaison de communication disponible sélectionnée ;
recevoir, par un récepteur, un message avec un fichier joint en utilisant une liaison de communication disponible autre que la NFC ;
reconnaître, par un répartiteur, le fichier joint en tant que message NDEF, extraire le message NDEF du fichier joint, et répartir le message NDEF extrait vers une application des une ou plusieurs applications.

16. Procédé selon la revendication 15, dans lequel le module de transmission comprend un module de transmission NFC.
